# EUROPÄISCHE PATENTANMELDUNG

(11) **EP 0 846 436 A1**
(43) Veröffentlichungstag der Anmeldung: **10.06.1998**
(21) Anmeldenummer: 97100437.9
(22) Anmeldetag: 14.01.1997
(51) Int. Cl.: A47J 37/07

(54) **Gas-Bräter mit Standbeinen**

(30) Priorität: 28.11.1996 DE 29620678 U
(71) Anmelder: Metallverarbeitung O. Klahr, 35687 Dillenburg (DE)
(72) Erfinder: Klahr, Ottfried, 35687 Dillenburg (DE)
(74) Vertreter: Müller, Gerd, Dipl.-Ing.

(57) **Zusammenfassung**

Bei einem Gas-Bräter (1) mit Standbeinen (5, 6) werden die Transportmöglichkeiten verbessert, wenn die Standbeine (5, 6) lösbar an der Gerätewanne (2) befestigt sind.

## Beschreibung

Die Erfindung betrifft Gas-Bräter mit Standbeinen, wie sie als Stand- oder Tischgerät bekannt sind.

Diese beiden bekannten Gerätearten unterscheiden sich dadurch voneinander, daß das Tischgerät nur sehr kurze Beine aufweist, während bei dem Standgerät die vier an den Ecken der Gerätewanne angebrachten Beine von solcher Länge sind, daß eine Bedienungsperson bei auf dem Boden aufgestelltem Standgerät in bequemer Höhe arbeiten kann.

Ein sowohl als Stand- als auch als Tischgerät zu benutzender Gas-Bräter ist durch das DE-U- 91 01 689.4 bekanntgeworden. Die Standbeine dieses Gerätes sind zweiteilig ausgebildet, wobei die Trennebene kurz unterhalb der Gerätewanne verläuft und jedes Bein folglich aus einem oberen Beinabschnitt und einem unteren Beinabschnitt besteht; die Abschnitte lassen sich teleskopartig zusammenstecken. Diese bekannte Bauweise erlaubt einen raumsparenden Transport, weil an dem Gerät nur die kurzen Beine befestigt sind, die sich bei Verwendung des Bräters als Standgerät durch Anbauen der unteren, längeren Beinabschnitte in der Trennebene mit den kurzen, gehäusefesten Beinen zu den gewünscht langen Standbeinen verbinden lassen.

Der Erfindung liegt die Aufgabe zugrunde, einen Gas-Bräter hinsichtlich der Transportmöglichkeiten noch einfacher zu gestalten.

Diese Aufgabe wird erfindungsgemäß dadurch gelöst, daß die Standbeine lösbar an der Gerätewanne befestigt sind. Es wird hiermit in verblüffend einfacher Weise erreicht, daß im Gegensatz zu den bekannten Gas-Brätern unterhalb der Gerätewanne überhaupt kein Raum mehr verloren geht und z.B. mehrere Gerätewannen direkt übereinandergestapelt werden können. Denn zum Transport besitzen die erfindungsgemäßen Gas-Bräter keinerlei an der Gerätewanne angebaute und selbst in kürzester Ausführung noch zusätzlichen Platz beanspruchende Beine. Diese lassen sich dann ohne größeren Montageaufwand vor Ort vorzugsweise anschrauben, wobei die Gerätewanne je nach Einsatzzweck des Gas-Bräters mit entweder kurzen oder langen Standbeinen versehen werden kann. Der spätere Zusammenbau zu einem entweder Stand- oder Tischgerät ermöglicht einen Transport mit voller Ausschöpfung des Transportraumes, wodurch nicht nur die Transportkosten gesenkt werden, sondern auch der Bedarf an Verpackungsmaterial verringert wird. Hierbei ist es möglich, die Gerätewannen und die kurzen und/oder langen Standbeine gesondert zu verpacken und zu transportieren.

Eine Ausgestaltung der Erfindung sieht vor, daß zumindest zwei der Standbeine - vorzugsweise bei einem Gas-Bräter mit langen Standbeinen - mit Transportrollen zu versehen ist. Damit läßt sich die Mobilität des kompletten Gerätes entscheidend erhöhen, denn es läßt sich durch einfaches leichtes, einseitiges Anheben bequem an jeden Ort bzw. eine beliebige Position verfahren. Alternativ könnten alle Beine solche Transportrollen aufweisen, von denen zumindest eine mit einer Bremseinrichtung zur Feststellung des Gerätes ausgebildet sein könnte; in diesem Falle entfiele das Anheben des Gerätes zum Verfahren.

Weitere Einzelheiten und Vorteile der Erfindung ergeben sich aus den Ansprüchen und der nachfolgenden Beschreibung, in der in den Zeichnungen dargestellte Ausführungsbeispiele des Gegenstandes der Erfindung näher erläutert sind. Es zeigen:
- Fig. 1: eine perspektivische Gesamtansicht eines Gas-Bräters; und
- Fig. 2: eine Ausführung eines Gas-Bräters mit Transportrollen an zwei stirnseitigen Standbeinen.

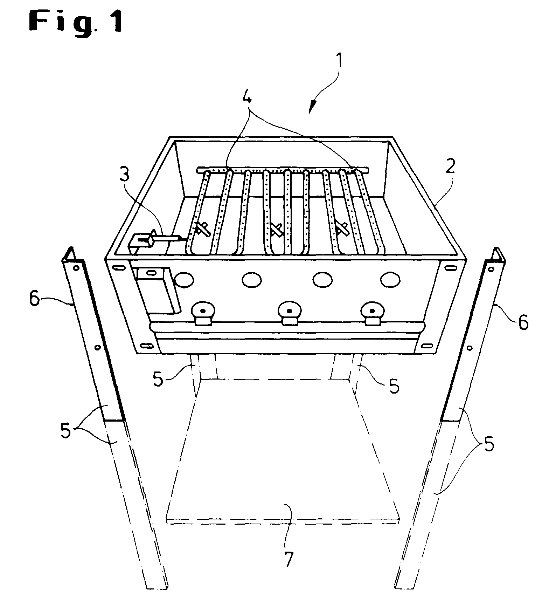

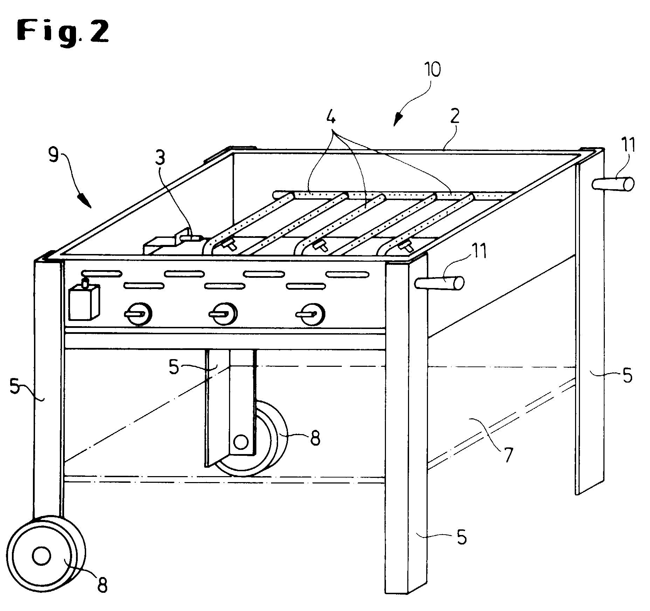

Ein als solcher hinlänglich bekannter Gas-Bräter 1 bzw. 10 (vgl. die Fig. 1 und 2) besteht aus einer Gerätewanne 2 mit einer darin angeordneten, von einem Zünder 3 zu zündenden Brennereinheit 4. Nicht dargestellt sind die Arbeitsplatte (Grillpfanne oder -rost) sowie weitere der üblichen Zubehör- und Anschlußteile des Bräters.

In der in Fig. 1 gezeigten Ausführung ist der Gas-Bräter 1 als Standgerät mit langen, einstückigen Standbeinen 5 versehen, von denen je eines an jeder Ecke der Gerätewanne 2 vor Ort angeschraubt wird, so daß der Gerätetransport ohne Raumverlust möglich ist, da sich die Gerätewannen 2 unmittelbar übereinanderstapeln lassen bzw. beim Tranport eines Einzelgerätes unterhalb der Gerätewanne 2 kein unnötiger Raum verloren geht. Bei der Standgerät-Version kann zur weiteren Stabilisierung ein Zwischenboden 7 eingesetzt werden. Sofern die Verwendung des Gas-Bräters 1 als Tischgerät gewünscht wird, werden statt der langen Standbeine - die in. durchgezogenen Linien im Vordergrund der Figur 1 angedeuteten kurzen Standbeine 6 an die Gerätewanne 2 angeschraubt. Es versteht sich, daß sowohl die Gerätewanne 2 als auch die langen Standbeine 5 bzw. die kurzen Standbeine 6 mit entsprechenden Bohrungen zum Einstecken von Schrauben ausgebildet sind.

Der in Fig. 2 dargestellte Gas-Bräter 10 ist transportabel ausgebildet, indem gemäß dem Ausführungsbeispiel die beiden Standbeine 5 an der einen Stirnseite 9 des Gerätes mit Transportrollen 8 versehen sind; an der gegenüberliegenden Stirnseite sind an der Gerätewanne 2 zwei Handgrife 11 angeordnet. Zum Verfahren läßt sich der gesamte Gasbräter 10 mittels der Handgriffe 11 auf einfache Weise einseitig anheben.

## Patentansprüche

1. Gas-Bräter mit Standbeinen,
**dadurch gekennzeichnet,**
daß die Standbeine (5; 6) lösbar an der Gerätewanne (2) befestigt sind.

2. Gas-Bräter nach Anspruch 1,
**gekennzeichnet durch**
wahlweise an die Gerätewanne (2) anzuschraubende kurze oder lange Standbeine (5 bzw. 6)

3. Gas-Bräter nach Anspruch 1 oder 2,
**dadurch gekennzeichnet,**
daß zumindest zwei der Standbeine (5) mit Transportrollen (7) versehen sind.
